# EUROPEAN PATENT SPECIFICATION

(11) **EP 4 291 884 B1**
(45) Date of publication and mention of the grant of the patent: **02.09.2026**
(21) Application number: 21925978.5
(22) Date of filing: 10.02.2021
(51) Int. Cl.: G01N 29/04, G01N 29/06, G01N 29/09, G01N 29/14, G01N 29/24, G01N 29/07, G01N 29/11

(54) **ULTRASONIC MEASUREMENT REPRESENTATION**
ULTRASCHALLMESSUNGSDARSTELLUNG
REPRÉSENTATION DE MESURES ULTRASONORES

(43) Date of publication of application: 20.12.2023
(73) Proprietor: Baker Hughes Oilfield Operations LLC, Houston, TX 77079 (US)
(72) Inventor: GOPAKUMAR, Appu, 2152EE Nieuw Vennep (NL); LEI, Jiamin, Shanghai, 201203 (CN); YADAVALLI, Siva, Sankar, Bangalore Karnataka 560066 (IN); RAMAMOORTHY, Balaji, Bangalore, Karnataka 560032 (IN)
(74) Representative: Novagraaf Group
(86) International application number: PCT/US2021/017439
(87) International publication number: WO 2022/173427

(56) References cited:
- EP-A1- 3 315 961
- EP-A2- 4 012 401
- WO-A1-2015/126787
- JP-A- 2010 054 349
- JP-A- 2010 266 378
- US-A- 5 750 895
- US-A1- 2013 338 941
- US-A1- 2013 338 941
- US-A1- 2014 036 627
- US-A1- 2014 204 702

## Description

### BACKGROUND

Non-destructive testing (NDT) is a class of analytical techniques that can be used to inspect a target, without causing damage, to ensure that the inspected target meets required specifications. For this reason, NDT has found wide acceptance in industries such as aerospace, power generation, oil and gas transport or refining, and transportation, that employ structures that are not easily removed from their surroundings. EP 3 315 961 A1 discloses wrinkle characterization and performance prediction for composite structures.

In ultrasonic testing, acoustic (sound) energy in the form of waves can be directed towards a target object (e.g., train wheel). As the ultrasonic waves contact and penetrate the train wheel, they can reflect from features such as outer surfaces and interior defects (e.g., cracks, porosity, etc.). An ultrasonic sensor can acquire ultrasonic measurements of acoustic strength as a function of time. Subsequently, these ultrasonic measurements can be analyzed to provide testing results that characterize defects present within a train wheel, such as their presence or absence, location, and/or size.

### SUMMARY

Various aspects of the disclosed subject matter may provide one or more of the following capabilities.

The present invention is defined in the accompanying claims. A method includes receiving data characterizing a plurality of acoustic signals detected at a plurality of segments of an industrial system. A first data subset of the received data is associated with a first acoustic signal detected at a first segment of the plurality of segments and a second data subset of the received data is associated with a second acoustic signal detected at a second segment of the plurality of segments. The method also includes assigning a first characteristic color to the first data subset based on a first time of propagation and an amplitude of the first acoustic signal, and assigning a second characteristic color to the second data subset based on a second time of propagation and amplitude of the second acoustic signal. The method further includes rendering, in a graphical user interface display space, a first visual representation of at least a portion of the industrial system including the first segment and the second segment of the industrial system. A first portion of the first visual representation represents the first segment and is characterized by the first characteristic color and a second portion of the first visual representation represents the second segment and is characterized by the second characteristic color.

One or more of the following features can be included in any feasible combination.

In some implementations, the first acoustic signal is reflected by a first defect located at a first depth relative to the surface of the first segment of the industrial system, and the second acoustic signal is reflected by a second defect located at a second depth relative to the surface of the second segment of the industrial system.

In some implementations, the first acoustic signal is reflected by a first defect located at a first defect depth relative to the surface of the first segment of the industrial system, the first defect depth proportional to the first time of propagation. The second acoustic signal is reflected by a second defect located at a second defect depth relative to the surface of the second segment of the industrial system, the second defect depth proportional to the second time of propagation. In some implementations, the method further including receiving a first user input based on a first interaction with the graphical user interface display space. The first user input indicative of one of a selection of the first portion of the first visual representation and varying a size of the first visual representation in the graphical user interface display space.

In some implementations, the method further includes determining that a zoom level associated with the visual representation is above a threshold value; and rendering in the graphical user interface display space, one or more of the amplitude of the first acoustic signal and the first defect depth. In some implementations, the method further includes rendering, in the graphical user interface display space, a second visual representation of the first acoustic signal in a graph including a first axis indicative of defect depth and a second axis indicative of amplitudes of acoustic signals detected by the detector. The first visual representation of the first acoustic signal includes the assigned first characteristic color.

In some implementations, assigning the first characteristic color is based on value of the amplitude of the first acoustic signal relative to one or more predetermined threshold amplitude values corresponding to the first depth. In some implementations, the method further includes assigning a second characteristic color to a third data subset based on a third time of propagation and an amplitude of a third acoustic signal of the plurality of acoustic signals. The third acoustic signal detected at the first segment of the plurality of segments. The method further includes rendering, in the graph in the graphical user interface display space, a third visual representation of the third acoustic signal. The third visual representation includes the assigned second characteristic color.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g. the Internet, a wireless wide area network, a local area network, a wide area network, a wired network, or the like), via a direct connection between one or more of the multiple computing systems, etc.

These and other capabilities of the disclosed subject matter will be more fully understood after a review of the following figures, detailed description, and claims.

### BRIEF DESCRIPTION OF THE FIGURES

These and other features will be more readily understood from the following detailed description taken in conjunction with the accompanying drawings, in which:
FIG. 1 is a flow chart of an exemplary method for acoustic measurement at multiple segments of an industrial system;
FIG. 2 is a three-dimensional schematic illustration of an acoustic detection system that can perform acoustic measurements at multiple segments of an industrial system;
FIG. 3 is a side view of the schematic illustration in FIG. 2;
FIG. 4 illustrates an exemplary graphical user interface (GUI) display space of the detection system in FIG. 2; and
FIG. 5 illustrates an exemplary graph indicative of defect detection at a segment of the industrial system.

### DETAILED DESCRIPTION

Defects in industrial systems (e.g., machines, pipes, etc.) can be detected using acoustic or ultrasonic measurement. Acoustic or ultrasonic measurement can allow for detection of internal defects (e.g., defects located underneath the surface of the industrial system). Acoustic measurement can involve transmitting acoustic signals into the industrial system and detecting a portion of the transmitted acoustic signal reflected by the defect (also referred to as "echo signal"). Based on the amplitude and/or time of travel of the echo signal (e.g., time between transmission of acoustic signal and reception of echo signal), various properties of the defects (e.g., size, depth, etc.) can be determined. In some cases, large amount of acoustic measurement data can be generated (e.g., when acoustic measurement is performed at multiple regions / segments of an industrial system and/or multiple acoustic measurements are performed at each segment). It can be desirable to visually represent acoustic measurement data that can allow a user (e.g., an inspector) to quickly and efficiently discern defect properties (e.g., size of the defect) at multiple segments of the industrial system (e.g., simultaneously). In some implementations, the current subject matter provides improved visual representations of acoustic measurement data in a graphical user interface (GUI) display space. The improved visual representation can be representative of the industrial system (e.g., can include an image of industrial system), and can be user interactive (e.g., allow the user to access acoustic measurement data from a desirable segment of the industrial system).

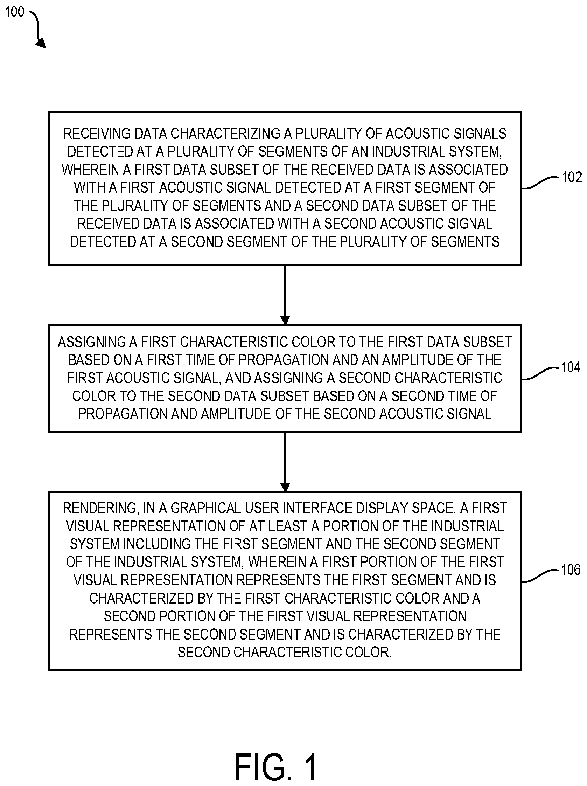

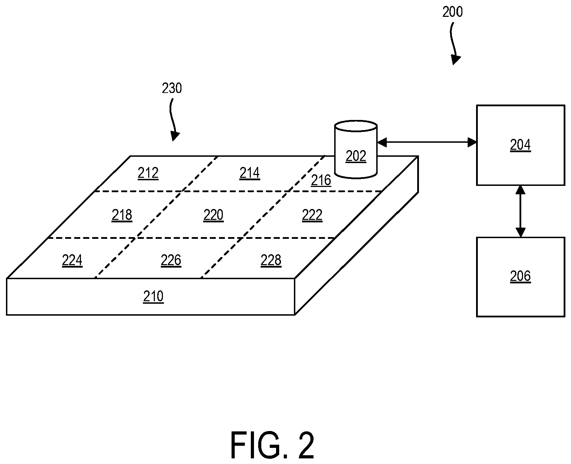

FIG. 1 is a flow chart of an exemplary method for acoustic measurement at multiple segments of an industrial system. At step 102, data characterizing a plurality of acoustic signals detected at a plurality of segments of an industrial system can be received (e.g., by a computing device). The various acoustic signals can be reflected by defects in the industrial system. FIG. 2 is a three-dimensional schematic illustration of an acoustic detection system 200 that can perform acoustic measurements at multiple segments (e.g., segments 212-228) of an industrial system 210. The detection system 200 can include a detector 202 that can travel across multiple segments (e.g., by moving over / along the surface 230) of the industrial system 210 and perform acoustic measurements (e.g., one or more acoustic measurement over one or more segments of the industrial system 210). The data received at step 102 can include a first data subset associated with a first acoustic signal detected at a first segment of the plurality of segments (e.g., segment 212, 214, 216, etc.). The received data can include a second data subset associated with a second acoustic signal detected at a second segment (e.g., different from the first segment) of the plurality of segments. In some implementations the first / second data subset can be associated with multiple acoustic signals detected at the corresponding segment (e.g., indicative of multiple defects in the corresponding segment).

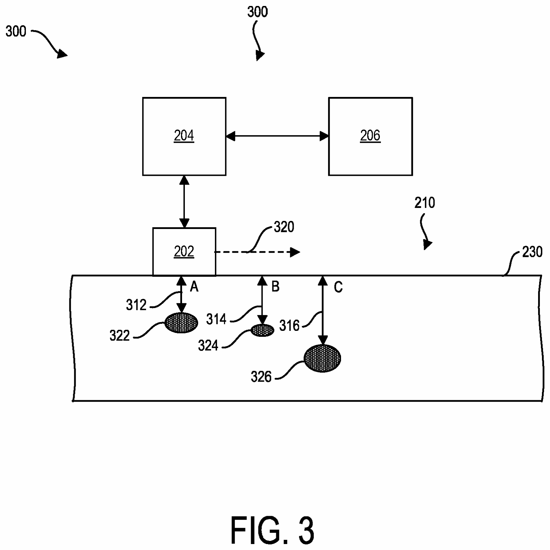

FIG. 3 is a side view of the acoustic detection system 200 illustrated in FIG. 2. The detector 202 can be configured to transmit acoustic signals into the industrial system 210 and detect a reflection of the transmitted acoustic signal from defects in the industrial system 210 (e.g., defects 322-326). The defects can be located in the various segments 212-228 of the industrial system 210. In some implementations a given segment can include multiple defects. This can result in multiple reflections of acoustic signals transmitted in the given segment. Additionally or alternately, a given segment may not include any defects, and no reflection of acoustic signal may be detected in the given segment.

As described above, the detector 202 can be configured to move along the surface 230 of the industrial system 210. For example, the detector 202 can move along the direction 220 to locations A, B and C on the surface 230. Locations A, B, C (or a portion thereof) can be located in different segments or in the same segment. At each of these locations, the detector 202 can perform one or more defect detection in the industrial system 210 by emission of an acoustic signal and detection of a reflection of the acoustic signal (or a portion thereof) by a defect (e.g., defect 322-326). For example, the detector 202 can be positioned at location "A" (e.g., located in a first segment) and configured to transmit an acoustic signal into the industrial system 210. The defect 322 located at a depth 312 (relative to the surface 230) can reflect a portion of the acoustic signal which can be detected by the detector 202. Additionally or alternately, the detector 202 can be positioned at location "B" (e.g., located in a second segment) and configured to transmit an acoustic signal into the industrial system 210. The defect 324 located at a depth 314 (relative to the surface 230) can reflect a portion of the acoustic signal which can be detected by the detector 202.

The defects 322-326 can be of different sizes and/or can be located at different depths. The detector can determine the size and depth of the defect based on the amplitude (or intensity) of the detected signal (or echo signal) and the time between the transmission of acoustic signal and detection of the echo signal. For example, the time between the transmission of acoustic signal and detection of the corresponding echo signal ("travel time") can be indicative of defect depth (e.g., depth 312 of defect 322, depth 314 of defect 324, and depth 316 of defect 326, etc.). Defect depth can be determined by multiplying the speed of acoustic signal in the target object with the travel time. The amplitude of the echo signal can be related to the size of the defect and the defect depth. The echo amplitude can be directly proportional to the size of the defect and inversely proportional to the defect depth. In other words, for a given depth, the echo amplitude increases as the size of the defect increases. On the other hand, for a given size of the defect, the echo amplitude decreases as the defect depth increases. Additionally or alternately, size of the defect can be determined based on echo amplitude and travel time.

The detection system 200 can also include a computing device 204 communicatively coupled to the detector 202. The computing device 204 can receive data characterizing one or more acoustic signals from one or more segments (e.g., segments 212-228) at step 102. The received data can include, for example, echo amplitude, travel time, defect depth etc. for the various acoustic signals that are detected by the detector 202. In some implementations, the computing device 204 can receive data characterizing multiple echo detections. For example, the detector 202 can be moved to a new location "B" and transmit an acoustic signal into the industrial system 210. The defect 324 located at a depth 314 (relative to the surface 230) can reflect a corresponding second echo which can be detected by the detector 202. The computing device 204 can receive data characterizing the second echo (e.g., echo amplitude, travel time, defect depth etc.) associated with the defect 324 and detected by the detector 202.

At step 104, a first characteristic color can be assigned to the first data subset (e.g., associated with acoustic measurement at a first segment) based on a first time of propagation and an amplitude of the first acoustic signal, and a second characteristic color can be assigned to the second data subset (e.g., associated with acoustic measurement at a second segment) based on a second time of propagation and amplitude of the second acoustic signal. The time of propagation and the amplitude of the acoustic signal (or echo amplitude) can be indicative of the size of the defect associated with the data subset. The assigned characteristic color can be indicative of the size of the defect detected by the acoustic detection associated with the first / second data subset.

Data characterizing the acoustic signal (or echo signal) received at step 102 (e.g., first data subset, second data subset, etc.) can be compared to a database of previously detected echo signals. The echo data can include echo amplitudes for defects of various sizes located at various depths. Based on the time of propagation and amplitude of acoustic signals corresponding to the various data subsets (e.g., first / second data subset), size of the defect corresponding to the acoustic signal can be determined. A characteristic color (e.g., first / second characteristic color) can be assigned to the data subsets (e.g., first / second data subset) based on the size of the corresponding defect. For example, defects having sizes (e.g., based on volume, radius, shape, etc.) within a predetermined range of values (e.g., first / second range of values) can be assigned a color (e.g., first / second color).

In some implementations, echo data can include a two dimensional matrix where a first dimension represents defect depths and the second dimension represents defect size. The echo data can be generated by performing detection of defects in a test object (e.g., made of the same material as the industrial system 210) that includes predetermined defects of various sizes located at various depths. For example, the echo data can include a first set of predetermined echo amplitudes (or intensities) associated with a defect of a first size (e.g., a first volume, radius, shape, etc.) located at various depths. The echo data can also include a second set of predetermined echo amplitudes (or intensities) associated with a defect of a second size (e.g., a first volume, radius, shape, etc.) located at various depths. The database of echo data can be stored, for example, in a memory of the computing device 204. Alternately or additionally, the echo data can be remotely stored (e.g., in a server, cloud, etc.), and the computing device 202 can access and receive the echo data from the remotely stored memory.

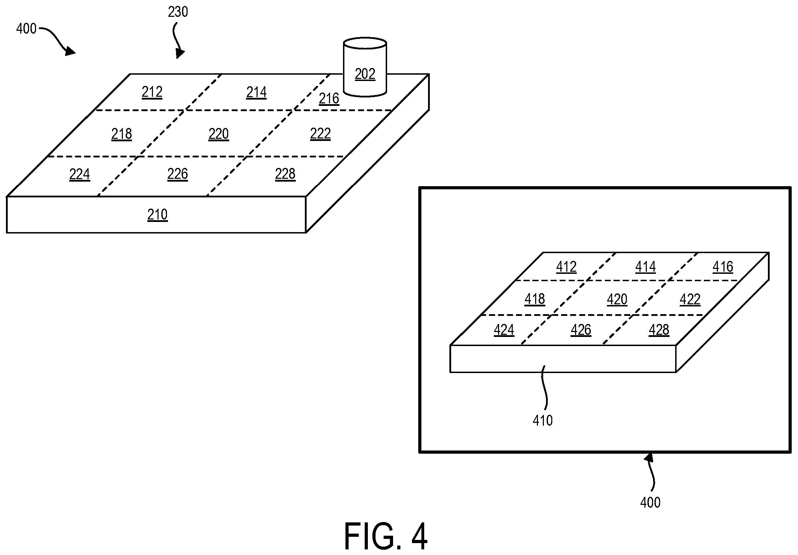

Returning to FIG. 1, at step 106, a first visual representation of at least a portion of the industrial system 210 can be rendered in a graphical user interface display space. The first visual representation can include images of the first segment and the second segment of the industrial system 210. A first portion of the first visual representation can represent the first segment and is characterized by the first characteristic color and a second portion of the first visual representation represents the second segment and is characterized by the second characteristic color. FIG. 4 illustrates an exemplary graphical user interface (GUI) display 400 of the detection system in FIG. 2 configured to render a visual representation 410 of the industrial system 210 and color-coded acoustic detection at various segments. In some implementations, the GUI display 400 can be included in the computing device 204. Additionally or alternately, the GUI display 400 can be included in user device 206. The first visual representation 410 can be an image (e.g., 2D image, 3D image) of the industrial system.

As illustrated in FIG. 4, the first visual representation 410 can be divided into multiple portions (e.g., each portion representative of a unique segment of the industrial system 210). For example, the first visual representation 410 can include portions 412-428, where each portion can corresponds to (or be representative of) a unique segment of the plurality of segments 212-228 of the industrial system 210 (e.g., first portion 412 corresponds to first segment 212, second portion 414 corresponds to second segment 214, etc.). The correspondence (or mapping) between the segments of the industrial system 210 and the portions of the first visual representation can be predetermined. The various portions can be color coded. For example, a given portion (e.g., portion 412, 414, etc.) can include the color assigned to the data subset of the corresponding segment (e.g., segment 212, 214, etc.) at step 104. In some implementations, the first visual representation 410 can have an arbitrary shape that can be different from an image of the industrial system 210. For example, the first visual representation can be an array of grids where each grid can be representative of a portion of the first visual representation 410.

A user can interact with the first visual representation 410 in the GUI display space 400 (e.g., a user interaction via a touchscreen, a mouse, etc.,). The touchscreen, the mouse, etc. can be included in the computing device 204. The user input can be indicative varying a size of the first visual representation in the graphical user interface display space, for example, by zooming in / out using the mouse (e.g., by clicking, double clicking, etc.), using touchscreen (e.g., by gestures such as pinching over the touchscreen ). If the user input is indicative of varying the size of the visual representation, a zoom level associated with the first visual representation can be determined (e.g., by computing device 204). The zoom level can be indicative of the size of the first visual representation 410 relative to the GUI display space 400. Based on the zoom level, various acoustic measurement information can be displayed in the GUI display space 400.

**In** some implementations, if the zoom level is above a predetermined threshold value, acoustic measurement information associated with one or more segments of the industrial system 210 can be displayed in the GUI display space 400. For example, one or more of amplitude of acoustic signal, defect depth, defect size, etc., associated with one or more segments can be displayed. The aforementioned acoustic measurement information can be displayed on or adjacent to the various portions of the first visual representation 410 (e.g., measurement information associated with various segments of the industrial system 210 [e.g., segment 212, 214, 216, etc.] can be displayed on or adjacent to the corresponding portion [e.g., portion 412, 414, 416, etc.] of the first visual representation 410. Alternately, if acoustic measurement information associated with one or more segments is displayed in the GUI display space 400 and the user zooms out (e.g., zoom level decreases below the predetermined zoom level), the aforementioned acoustic measurement information can be removed from the GUI display space 400.

A user input based on this user interaction can be indicative of a selection of a portion of the first visual representation (e.g., selection one of the portions 412-428). For example, a portion of the first visual representation can be selected by clicking (via a mouse), touching (via a touchscreen), etc., on the portion in the first visual representation 410. Based on the selection of a given portion of the first visual representation (e.g., portion 412, 414, 416, etc.) a graph including a second visual representation of the acoustic measurement signal at the corresponding segment (e.g., segment 212, 214, 216, respectively) can be displayed in the GUI display space 400. The graph can include a first axis indicative of defect depth (e.g., related to time of travel of acoustic signal) and a second axis indicative of amplitudes of acoustic signals detected by the detector at the segment (e.g., segment 212, 214, 214, etc.) corresponding to the selected portion (e.g., portion 412, 414, 414, respectively). The second visual representation of the acoustic signal includes the characteristic color assigned to measurement data subset of the segment at step 104.

In some implementations, multiple defects can be detected at a given segment (e.g., in segment 212, 214, 216, etc.). As a result, multiple acoustic detections can be performed in that segment that can result in the generation of multiple acoustic signals. Data sets associated with these multiple acoustic signals can be assigned a characteristic color (e.g., as described at step 104). For example, a third characteristic color can be assigned to a third data subset (e.g., associated with a third acoustic signal at the first segment) based on a third time of propagation and an amplitude of the third acoustic signal. If the user selects the first segment that includes the first and the third defects, the graph can include a third visual representation of the third acoustic signal. The third visual representation can include the assigned third characteristic color.

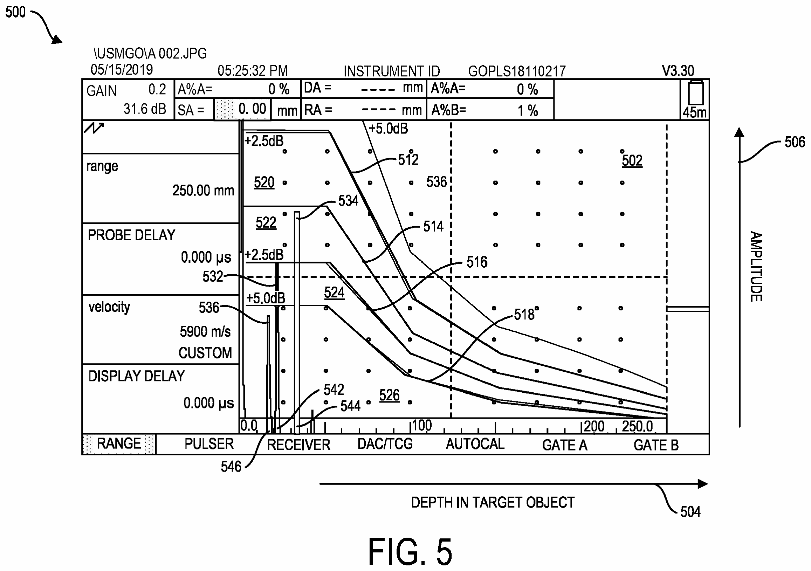

FIG. 5 illustrates an exemplary graph 502 in a graphical user interface (GUI) display space 500 of the detection system. The graph 502 can be associated with a given segment of the industrial system 210 (e.g., segment 212, 214, 216, etc.). The graph 502 can be rendered, for example, in the GUI display space 500 or a GUI display in a user device 206 communicatively coupled to the computing device 204. The graph 502 includes a first axis 504 indicative of defect depth and a second axis 506 indicative of amplitudes of acoustic signals detected by the detector 202. The graph 502 includes evaluation curves 512-518, where each evaluation curve is associated with predetermined echo amplitudes of defects of a given size as a function of defect depths. The first evaluation curve 512 can be representative of predetermined echo amplitude of defects having a first size, the second evaluation curve 514 can be representative of predetermined echo amplitude of defects having a second size, the second evaluation curve 516 can be representative of predetermined echo amplitude of defects having a third size, etc.

The predetermined echo amplitudes can decrease as the defect depth increases and increase as the defect size increases. For example, the defects associated with the evaluation curve 512 can be larger than the defects associated with evaluation curve 514, which in turn can be larger than the defects associated with evaluation curve 516. The defects associated with the evaluation curve 516 can be larger than the defects associated with evaluation curve 518. The evaluation curves 512-518 can divide the graph 502 into regions 521-526 that are indicative of different range of echo amplitudes for the various depths. For example, region 526 can be representative of an acceptable defect size. In other words, the defects that generate an echo signal with amplitude in the region 526 may be considered acceptable (e.g., not a threat to the integrity of the industrial system 210). Defects that generate an echo signal with an amplitude in the region 524 may be considered acceptable. However, these defects may grow larger in the future to an unacceptable size and therefore may require additional monitoring (e.g., monitoring on a regular basis). Defects that generate an echo with an amplitude in the region 522 may be considered unacceptable. It may be desirable for the user (e.g., monitoring personnel) to review these defects to ensure that the usage of the industrial system 210 is safe. Defect that generate an echo signal with an amplitude in the region 520 may be considered dangerous. It may be desirable to immediately suspend the industrial process involving the industrial system 210.

For a segment of the industrial system 210 with multiple defects (e.g., first and third defect), the detector 202 can transmit multiple acoustic signals (e.g., first and third acoustic signal) into the industrial system 210 and detect multiple echo corresponding to the transmitted signals. The visual representations corresponding to the first and third acoustic signal can be color coded (e.g., based on the characteristic colors assigned to their data subsets) and can be presented in the graph 502 of the GUI display space 500 .

The color of the visual representation (or a portion thereof) of the first acoustic signal can be based on the location of the peak of the visual representation of the first acoustic signal. For example, as illustrated in FIG. 5, the visual representation 532 is assigned an orange color which can indicate that the defect associated with the first visual representation 532 has an acceptable size. Another visual representation 534 associated with another defect (e.g., third defect) is assigned a maroon color which can indicate that the corresponding defect has an unacceptable size. Yet another visual representation 536 associated with a yet another defect is assigned a white color which can indicate that the corresponding defect has an acceptable size and is not at a risk of having unacceptable size in near future. The assignment of the color can be predetermined (e.g., based on the regions 520-526 determined by the evaluation curve 512-518 associated with defects of various sizes).

As illustrated in FIG. 5, the defect associated with the visual representation 532 is located at the first depth 542, the defect associated with the visual representation 534 is located at the second depth 544 and the defect associated with the visual representation 536 is located at the third depth 546. The peak of the visual representation 532 is located between the evaluation curves 516 and 518. This indicates that the size of the defect is between the sizes of the predetermined defects associated with evaluation curve 516 and the predetermined defects associated with evaluation curve 518. The peak of the visual representation 534 is located between the evaluation curves 514 and 516. This indicates that the size of the defect is between the sizes of the predetermined defects associated with evaluation curve 514 and the predetermined defects associated with evaluation curve 516.

Other embodiments are within the scope of the disclosed subject matter. For example, the monitoring system described in this application can be used in facilities that have complex machines with multiple operational parameters that need to be altered to change the performance of the machines (e.g., power generating turbines). Usage of the word "optimize" / "optimizing" in this application can imply "improve" / "improving."

Certain exemplary embodiments are described herein to provide an overall understanding of the principles of the structure, function, manufacture, and use of the systems, devices, and methods disclosed herein. One or more examples of these embodiments are illustrated in the accompanying drawings. Those skilled in the art will understand that the systems, devices, and methods specifically described herein and illustrated in the accompanying drawings are nonlimiting exemplary embodiments and that the scope of the present invention is defined solely by the claims. The features illustrated or described in connection with one exemplary embodiment may be combined with the features of other embodiments. Such modifications and variations are intended to be included within the scope of the present invention as defined by the appended claims. Further, in the present disclosure, like-named components of the embodiments generally have similar features, and thus within a particular embodiment each feature of each like-named component is not necessarily fully elaborated upon.

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a Read-Only Memory or a Random Access Memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software *per se).* Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web interface through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Approximating language, as used herein throughout the specification and claims, may be applied to modify any quantitative representation that could permissibly vary without resulting in a change in the basic function to which it is related. Accordingly, a value modified by a term or terms, such as "about" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

## Claims

1. A method (100) comprising:
receiving (102) data characterizing a plurality of acoustic signals detected at a plurality of segments (212-228) of an industrial system (210), wherein a first data subset of the received data is associated with a first acoustic signal detected at a first segment of the plurality of segments and a second data subset of the received data is associated with a second acoustic signal detected at a second segment of the plurality of segments (212-228);
assigning (104) based on regions (520-526) determined by evaluation curves (512-518) associated with defects of various sizes as a function of defect depth a first characteristic color to the first data subset based on a first time of propagation and an amplitude of the first acoustic signal, and assigning a second characteristic color to the second data subset based on a second time of propagation and amplitude of the second acoustic signal;
rendering (106), in a graphical user interface display space (400), a first visual representation of at least a portion of the industrial system (210) including the first segment and the second segment of the industrial system,
wherein a first portion of the first visual representation represents the first segment and is **characterized by** the first characteristic color and a second portion of the first visual representation represents the second segment and is **characterized by** the second characteristic color.

2. The method of claim 1, wherein the first acoustic signal is reflected by a first defect located at a first defect depth relative to the surface of the first segment of the industrial system (210), the first defect depth proportional to the first time of propagation, and
wherein the second acoustic signal is reflected by a second defect located at a second defect depth relative to the surface of the second segment of the industrial system (210), the second defect depth proportional to the second time of propagation.

3. The method of claim 1, further including receiving a first user input based on a first interaction with the graphical user interface display space (400), the first user input indicative of one of a selection of the first portion of the first visual representation and varying a size of the first visual representation in the graphical user interface display space (400).

4. The method of claim 3, further including:
determining that a zoom level associated with the visual representation is above a threshold value; and
rendering in the graphical user interface display space (400), the amplitude of the first acoustic signal and/or the first defect depth.

5. The method of claim 4, further including:
rendering, in the graphical user interface display space (500), a second visual representation of the first acoustic signal in a graph (502) including a first axis (504) indicative of defect depth and a second axis (506) indicative of amplitudes of acoustic signals detected by the detector, wherein the first visual representation of the first acoustic signal includes the assigned first characteristic color.

6. The method of claim 4, wherein assigning the first characteristic color is based on value of the amplitude of the first acoustic signal relative to one or more predetermined threshold amplitude values corresponding to the first depth.

7. The method of claim 6, further comprising:
assigning a second characteristic color to a third data subset based on a third time of propagation and an amplitude of a third acoustic signal of the plurality of acoustic signals,
wherein the third acoustic signal detected at the first segment of the plurality of segments;
rendering, in the graph in the graphical user interface display space, a third visual representation of the third acoustic signal, wherein the third visual representation includes the assigned second characteristic color.

8. A system (200) comprising:
at least one data processor;
a detector (202) for detecting a plurality of acoustic signals detected at a plurality of segments of an industrial system,
a memory coupled to the at least one data processor, the memory storing instructions to cause the system to receive said plurality of acoustic signals and
the at least one data processor to perform operations comprising the method of any one of the preceding claims.

9. A computer program product comprising a non-transitory machine-readable medium storing instructions to cause the system of claim 8 to execute the steps of the method of any one of claims 1 to 7.

## Patentansprüche

1. Verfahren (100), umfassend:
Empfangen (102) von Daten, die eine Vielzahl von akustischen Signalen, die an einer Vielzahl von Segmenten (212-228) eines industriellen Systems (210) erfasst werden, charakterisieren, wobei eine erste Datenteilmenge der empfangenen Daten mit einem ersten akustischen Signal, das an einem ersten Segment der Vielzahl von Segmenten erfasst wird, verknüpft ist, und eine zweite Datenteilmenge der empfangenen Daten mit einem zweiten akustischen Signal, das an einem zweiten Segment der Vielzahl von Segmenten (212-228) erfasst wird, verknüpft ist;
Zuweisen (104), basierend auf Bereichen (520-526), die durch Auswertungskurven (512-518) bestimmt sind, die mit Fehlern variierender Größen in Abhängigkeit von Fehlertiefe verknüpft sind, einer ersten Merkmalsfarbe zu der ersten Datenteilmenge basierend auf einer ersten Ausbreitungszeit und einer Amplitude des ersten akustischen Signals, und Zuweisen einer zweiten Merkmalsfarbe zu der zweiten Datenteilmenge basierend auf einer zweiten Ausbreitungszeit und einer Amplitude des zweiten akustischen Signals;
Rendern (106), in einem Anzeigeraum (400) einer grafischen Benutzeroberfläche, einer ersten visuellen Darstellung mindestens eines Abschnitts des industriellen Systems (210), einschließlich des ersten Segments und des zweiten Segments des industriellen Systems,
wobei ein erster Abschnitt der ersten visuellen Darstellung das erste Segment darstellt und **durch** die erste Merkmalsfarbe **gekennzeichnet** ist und ein zweiter Abschnitt der ersten visuellen Darstellung das zweite Segment darstellt und **durch** die zweite Merkmalsfarbe **gekennzeichnet** ist.

2. Verfahren nach Anspruch 1, wobei das erste akustische Signal durch einen ersten Fehler, der sich an einer ersten Fehlertiefe relativ zu der Oberfläche des ersten Segments des industriellen Systems (210) befindet, reflektiert wird, wobei die erste Fehlertiefe zu der ersten Ausbreitungszeit proportional ist, und
wobei das zweite akustische Signal durch einen zweiten Fehler, der sich an einer zweiten Fehlertiefe relativ zu der Oberfläche des zweiten Segments des industriellen Systems (210) befindet, reflektiert wird, wobei die zweite Fehlertiefe zu der zweiten Ausbreitungszeit proportional ist.

3. Verfahren nach Anspruch 1, ferner einschließlich das Empfangen einer ersten Benutzereingabe basierend auf einer ersten Interaktion mit dem Anzeigeraum (400) der grafischen Benutzeroberfläche, wobei die erste Benutzereingabe eines von einer Auswahl des ersten Abschnitts der ersten visuellen Darstellung und einem Variieren einer Größe der ersten visuellen Darstellung in dem Anzeigeraum (400) der grafischen Benutzeroberfläche angibt.

4. Verfahren nach Anspruch 3, ferner einschließlich:
Bestimmen, dass ein Zoom-Niveau, das mit der visuellen Darstellung verknüpft ist, über einem Schwellenwert liegt; und
Rendern, in dem Anzeigeraum (400) der grafischen Benutzeroberfläche, der Amplitude des ersten akustischen Signals und/oder der ersten Fehlertiefe.

5. Verfahren nach Anspruch 4, ferner einschließlich:
Rendern, in dem Anzeigeraum (500) der grafischen Benutzeroberfläche, einer zweiten visuellen Darstellung des ersten akustischen Signals in einem Graphen (502), einschließlich einer erste Achse (504), die Fehlertiefe angibt, und einer zweiten Achse (506), die Amplituden akustischer Signale, die durch den Detektor erfasst werden, angibt, wobei die erste visuelle Darstellung des ersten akustischen Signals die zugewiesene erste Merkmalsfarbe einschließt.

6. Verfahren nach Anspruch 4, wobei das Zuweisen der ersten Merkmalsfarbe auf einem Wert der Amplitude des ersten akustischen Signals relativ zu einem oder mehreren zuvor bestimmten Amplitudenschwellenwerten, die der ersten Tiefe entsprechen, basiert.

7. Verfahren nach Anspruch 6, ferner umfassend:
Zuweisen einer zweiten Merkmalsfarbe zu einer dritten Datenteilmenge basierend auf einer dritten Ausbreitungszeit und einer Amplitude eines dritten akustischen Signals der Vielzahl von akustischen Signalen,
wobei das dritte akustische Signal an dem ersten Segment der Vielzahl von Segmenten erfasst wird;
Rendern, in dem Graphen in dem Anzeigeraum der grafischen Benutzeroberfläche, einer dritten visuellen Darstellung des dritten akustischen Signals, wobei die dritte visuelle Darstellung die zugewiesene zweite Merkmalsfarbe aufweist.

8. System (200), umfassend:
mindestens einen Datenprozessor;
einen Detektor (202) zum Erfassen einer Vielzahl von akustischen Signalen, die an einer Vielzahl von Segmenten eines industriellen Systems erfasst werden, einen Speicher, der mit dem mindestens einen Datenprozessor gekoppelt ist, wobei der Speicher Anweisungen speichert, die das System veranlassen, die Vielzahl von akustischen Signalen zu empfangen, und den mindestens einen Datenprozessor veranlassen, Vorgänge, umfassend das Verfahren nach einem der vorstehenden Ansprüche, durchzuführen.

9. Computerprogrammprodukt umfassend ein nicht flüchtiges maschinenlesbares Medium, das Anweisungen speichert, die das System nach Anspruch 8 veranlassen, die Schritte des Verfahrens nach einem der Ansprüche 1 bis 7 auszuführen.

## Revendications

1. Procédé (100) comprenant :
la réception (102) de données caractérisant une pluralité de signaux acoustiques détectés au niveau d'une pluralité de segments (212-228) d'un système industriel (210), dans lequel un premier sous-ensemble de données des données reçues est associé à un premier signal acoustique détecté au niveau d'un premier segment de la pluralité de segments et un deuxième sous-ensemble de données des données reçues est associé à un deuxième signal acoustique détecté au niveau d'un second segment de la pluralité de segments (212-228) ;
l'attribution (104), sur la base de régions (520-526) déterminées par des courbes d'évaluation (512-518) associées à des défauts de différentes tailles en fonction d'une profondeur de défaut, d'une première couleur caractéristique au premier sous-ensemble de données sur la base d'un premier temps de propagation et d'une amplitude du premier signal acoustique, et l'attribution d'une seconde couleur caractéristique au deuxième sous-ensemble de données sur la base d'un deuxième temps de propagation et d'une amplitude du deuxième signal acoustique ;
le rendu (106), dans un espace d'affichage d'interface utilisateur graphique (400), d'une première représentation visuelle d'au moins une partie du système industriel (210) comportant le premier segment et le second segment du système industriel,
dans lequel une première partie de la première représentation visuelle représente le premier segment et est **caractérisée par** la première couleur caractéristique et une seconde partie de la première représentation visuelle représente le second segment et est **caractérisée par** la seconde couleur caractéristique.

2. Procédé selon la revendication 1, dans lequel le premier signal acoustique est réfléchi par un premier défaut situé au niveau d'une première profondeur de défaut par rapport à la surface du premier segment du système industriel (210), la première profondeur de défaut étant proportionnelle au premier temps de propagation, et
dans lequel le deuxième signal acoustique est réfléchi par un second défaut situé au niveau d'une seconde profondeur de défaut par rapport à la surface du second segment du système industriel (210), la seconde profondeur de défaut étant proportionnelle au deuxième temps de propagation.

3. Procédé selon la revendication 1, comportant en outre la réception d'une première entrée utilisateur sur la base d'une première interaction avec l'espace d'affichage d'interface utilisateur graphique (400), la première entrée utilisateur indiquant l'une parmi une sélection de la première partie de la première représentation visuelle et la variation d'une taille de la première représentation visuelle dans l'espace d'affichage d'interface utilisateur graphique (400).

4. Procédé selon la revendication 3, comportant en outre :
le fait de déterminer qu'un niveau de zoom associé à la représentation visuelle est supérieur à une valeur seuil ; et
le rendu, dans l'espace d'affichage d'interface utilisateur graphique (400), de l'amplitude du premier signal acoustique et/ou de la première profondeur de défaut.

5. Procédé selon la revendication 4, comportant en outre :
le rendu, dans l'espace d'affichage d'interface utilisateur graphique (500), d'une deuxième représentation visuelle du premier signal acoustique dans un graphique (502) comportant un premier axe (504) indiquant la profondeur de défaut et un second axe (506) indiquant des amplitudes de signaux acoustiques détectés par le détecteur, dans lequel la première représentation visuelle du premier signal acoustique comporte la première couleur caractéristique attribuée.

6. Procédé selon la revendication 4, dans lequel l'attribution de la première couleur caractéristique est basée sur une valeur de l'amplitude du premier signal acoustique par rapport à une ou plusieurs valeurs d'amplitude seuil prédéterminées correspondant à la première profondeur.

7. Procédé selon la revendication 6, comprenant en outre :
l'attribution d'une seconde couleur caractéristique à un troisième sous-ensemble de données sur la base d'un troisième temps de propagation et d'une amplitude d'un troisième signal acoustique de la pluralité de signaux acoustiques,
dans lequel le troisième signal acoustique étant détecté au niveau du premier segment de la pluralité de segments ;
le rendu, dans le graphique dans l'espace d'affichage d'interface utilisateur graphique, d'une troisième représentation visuelle du troisième signal acoustique, dans lequel la troisième représentation visuelle comporte la seconde couleur caractéristique attribuée.

8. Système (200) comprenant :
au moins un processeur de données ;
un détecteur (202) permettant de détecter une pluralité de signaux acoustiques détectés au niveau d'une pluralité de segments d'un système industriel, une mémoire couplée à l'au moins un processeur de données, la mémoire stockant des instructions pour amener le système à recevoir ladite pluralité de signaux acoustiques et l'au moins un processeur de données à effectuer des opérations comprenant le procédé selon l'une quelconque des revendications précédentes.

9. Produit-programme d'ordinateur comprenant un support non transitoire lisible par machine stockant des instructions pour amener le système selon la revendication 8 à exécuter les étapes du procédé selon l'une quelconque des revendications 1 à 7.
